# EUROPEAN PATENT APPLICATION

(11) **EP 0 663 279 A2**
(43) Date of publication of application: **19.07.1995**
(21) Application number: 95300157.5
(22) Date of filing: 11.01.1995
(51) Int. Cl.: B29C 65/14

(54) **Apparatus and method for welding tubular members**

(30) Priority: 13.01.1994 JP 14787/94
(71) Applicant: KUREHA KAGAKU KOGYO KABUSHIKI KAISHA, Chuo-ku Tokyo 103 (JP)
(72) Inventor: Yamanobe, Youichirou, c/o Nishiki Res. Lab., Iwaki-shi, Fukushima-ken 974 (JP); Usui, Satoshi c/o Nishiki Research Lab. of Kureha, Iwaki-shi Fukushima-ken 974 (JP)
(74) Representative: Baverstock, Michael George Douglas

(57) **Abstract**

A welding apparatus to be applied to a welding method of a non-contact type comprises a pair of clamp devices (16,18) for clamping tubular members (12,14) made of a thermoplastic resin, and a heater for heating to melt end faces of the tubular members, wherein the clamp devices and heater (20) are arranged to be movable by respective drive devices (30). A control unit controls the drive devices in such a manner that after completion of fusion of the end faces of the tubular members, the heater is moved to a withdrawn position and thereafter one of the clamp devices is moved in a predetermined direction to bring the end faces into contact with each other. Further, the control unit controls the drive device so that after contact of the end faces with each other, the clamp device is further moved by a predetermined amount. The time period between completion of fusion of the end faces and contact of the end faces with each other is set to a time in which the end faces are prevented from reaching a state unsuitable for welding, and the speed of movement of the clamp device after contact of the end faces with each other is kept approximately constant. By this means, the bead formed in the weld portion between the tubular members is made substantially constant and desired weld strength is attained.

## Description

The present invention relates to a butt welding method or butt fusion method, more particularly, an apparatus and a method for connecting a pair of tubular members made of a thermoplastic resin by heating end faces thereof and then pressing them together.

Tubular members made of a variety of synthetic resins are conventionally used in various applications. For example, tubular members formed of a general-purpose thermoplastic resin such as polyvinyl chloride, polypropylene, etc. are popularly used as distributing water pipes in houses or plants, etc., pipes for chemicals, etc. Further, tubular members made of a thermoplastic resin excellent in heat resistance and solvent resistance such as a polyphenylene sulfide resin (hereinafter referred to as "PPS"), polyether ether ketone, polyvinylidene fluoride, etc. are used as pipes for ultrapure water in fabrication of electronic devices such as LSI etc.

In actual piping using such tubular members of thermoplastic synthetic resins, it may be necessary to connect a tubular member to another or to connect a tubular member to a tubular end of an instrument. One known connection method between tubular members is a welding method in which a heater heats and melts end faces of two tubular members opposed to each other and thereafter the melted end faces are urged against each other to be connected thereby.

As a typical welding method, a contact type welding method in which end faces to be welded are melted in direct contact with the heater, as disclosed for example in Japanese Patent Publication No. 63-29011, is well known. When the material for tubular members is PPS or a polyether ether ketone, it may be difficult to peel off the tubular members from the heater in the contact type welding method. For this reason, a recent trend is to employ a welding method of a non-contact type in which the end faces are melted with a clearance between the end faces to be welded and the heater, as disclosed for example in Japanese Patent Laid-open No. 1-110128.

A well-known apparatus used for the contact type welding method is for example one as disclosed in Japanese Patent Laid-open No. 63-4938, while a well-known apparatus used for the non-contact type welding method is for example one as disclosed in Japanese Patent Laid-open No. 5-193004. Either one of the conventional apparatus comprises clamps for holding a pair of tubular members to be welded horizontally and coaxially, and a heater set between the clamps, wherein one clamp can be moved toward or away from the other clamp by means of a pneumatic cylinder or a hydraulic cylinder and wherein the heater is arranged to be capable of receding from a moving path of the tubular member. Such apparatus can join the tubular members to each other by moving the movable clamp toward the other clamp after the heater melts the end faces of the tubular members to be welded.

The above welding apparatus are arranged to weld the tubular members in such a manner that the end faces of the tubular members heated and melted are pressed against each other under a constant pressure by a pneumatic cylinder or fluid cylinder. Accordingly, the melted end faces are pressed against each other until the pressure of the fluid cylinder is balanced by reactive force of the melted end faces of the tubular members.

It sometimes happens that the degree of fusion or melting is different between resins of the same chemical structure made by the same maker even with heating at the same temperature, because there are variations in molecular weight distribution, kneading, etc. Also, the degree of fusion of the end faces of the tubular members is greatly influenced by the ambient temperature, presence or absence of convection, etc. Thus, welding results are not always constant even if the press-contact pressure is kept constant. For example, if the fusion depth of the end faces of the tubular members is too shallow, the projection or bead formed on the inner circumferential surface or the outer circumferential surface of a weld portion becomes small; conversely, if the fusion depth is too deep, the bead becomes large.

Japanese Patent Laid-open No. 63-4938 discloses another means in such an arrangement that the end faces of the tubular members are brought into contact with each other, then one of the tubular members is moved by a hydraulic cylinder up to a position where appropriate penetration is achieved between the end faces, and thereafter the setting pressure of a solenoid relief valve between the hydraulic cylinder and a hydraulic fluid supply pump is adjusted so as to keep the pressing pressure constant. However, because the viscosity of the hydraulic fluid or the operational speed of the solenoid relief valve changes depending upon the temperature, the size of a bead formed may vary.

Further, because the tubular members made of a thermoplastic resin harden in a short time after completion of heating, it is desirable that the time period between when the end faces of the tubular members are melted and when the end faces of the tubular members come to contact each other be as short as possible. The above conventional apparatus, however, has a problem that the time period between the fusion and the contact of the end faces is very long because oil hydraulics or pneumatics were used for moving the tubular member. In particular, the contact type welding apparatus requires more time because it necessitates a step of peeling off the end faces of the tubular members from the heater.

It is, therefore, an object of this invention to provide a welding apparatus and method which are effective to keep constant always the bead formed in the weld portion between the tubular members and the weld strength of the weld portion.

To achieve the above object, an aspect of the present invention is a method for welding a pair of tubular members made of a thermoplastic resin, comprising: a step of holding the tubular members coaxially so that the end faces of the tubular members to be welded are opposed to and spaced from each other; a step of locating a heater between the end faces in such a state that the heater is separated from each of the end faces by a certain clearance; a step of activating the heater to heat and melt the end faces by heat from the heater; a step of removing the heater from between the end faces after completion of heating of the end faces; a step of moving one of the tubular members in a predetermined direction relative to the other tubular member to bring the end faces into contact with each other; a step of further moving the one tubular member in the predetermined direction relative to the other tubular member after the end faces contact each other; and a step of stopping the relative movement of the tubular members to hold the tubular members in a stationary state, when the one tubular member is moved by a predetermined amount relative to the other tubular member after contact of the end faces with each other; wherein the time period between completion of heating of the end faces and contact of the end faces with each other is set to a time in which the end faces are prevented from reaching a state inappropriate for welding; and wherein in most of the time period between contact of the end faces with each other and stoppage of the relative movement of the tubular members, the relative speed of movement of the one tubular member relative to the other tubular member is kept substantially constant.

Another aspect of the present invention is an apparatus for welding a pair of tubular members made of a thermoplastic resin comprising: a pair of holding devices for holding the respective tubular members horizontally and coaxially; a first drive device for moving one of the holding devices toward or away from the other holding device; a heater for heating and melting end faces of the tubular members to be welded, the heater being arranged to be movable between a heating position between the holding devices, and a withdrawn position away from the heating position; a second drive device for driving the heater; and a controller for controlling the first drive device and the second drive device. Further, the controller comprises means for controlling the second drive device so that the heater is moved from the heating position to the withdrawn position after the completion of heating of the end faces of the tubular members to be welded held by the holding devices, means for controlling the first drive device so that one of the holding devices is moved in a predetermined direction relative to the other holding device to bring the end faces into contact with each other, means for controlling the first drive device so that the one holding device is further moved in the predetermined direction relative to the other holding device after contact of the end faces with each other, and means for controlling the first drive device so that when the one holding device is moved by a predetermined amount relative to the other holding device after the contact of the end faces with each other, the relative movement of the holding devices is stopped, wherein a time period between the completion of heating of the end faces and contact of the end faces with each other is set to a time in which the end faces can be prevented from reaching a state inappropriate for welding, and wherein in most of the time period between contact of the end faces with each other and stoppage of the tubular members the relative movember speed of the one tubular member relative to the other tubular member is kept substantially constant.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

In the drawings:
Fig. 1 is a plan view to show an embodiment of the welding apparatus according to the present invention;
Fig. 2 is a front elevation of the welding apparatus shown in Fig. 1;
Fig. 3 is a side view of the welding apparatus shown in Fig. 1;
Fig. 4 is a block diagram to schematically show a controller and peripheral devices thereof in the welding apparatus shown in Fig. 1;
Fig. 5 is a plan view showing a second embodiment of the welding apparatus according to the present invention;
Fig. 6 is a front elevation of the welding apparatus shown in Fig. 5; and
Fig. 7 is a side view the welding apparatus shown in Fig. 5.

The preferred embodiments of the present invention will be described in detail with reference to the accompanying drawings. In the following description, like reference characters designate like or corresponding parts throughout the several views.

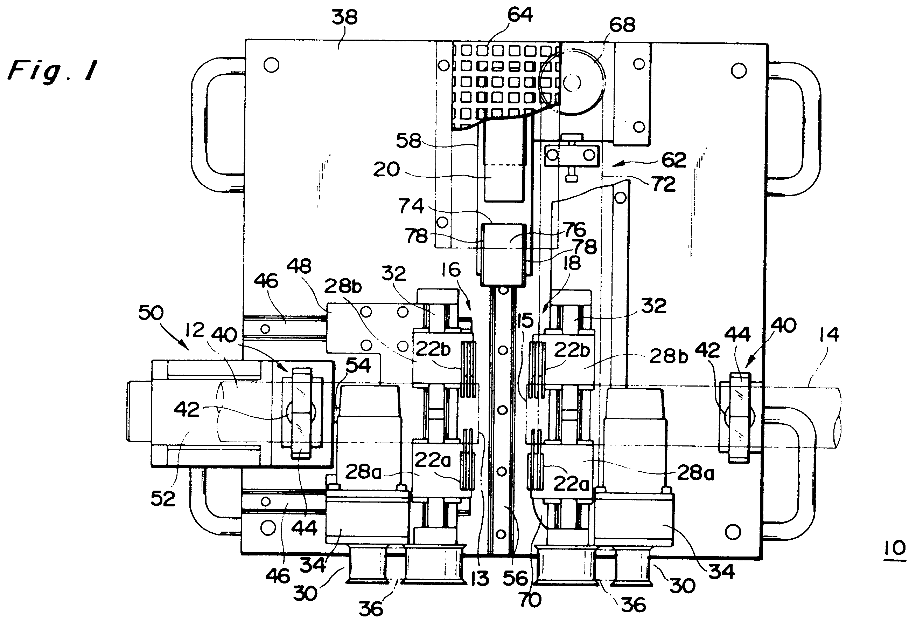

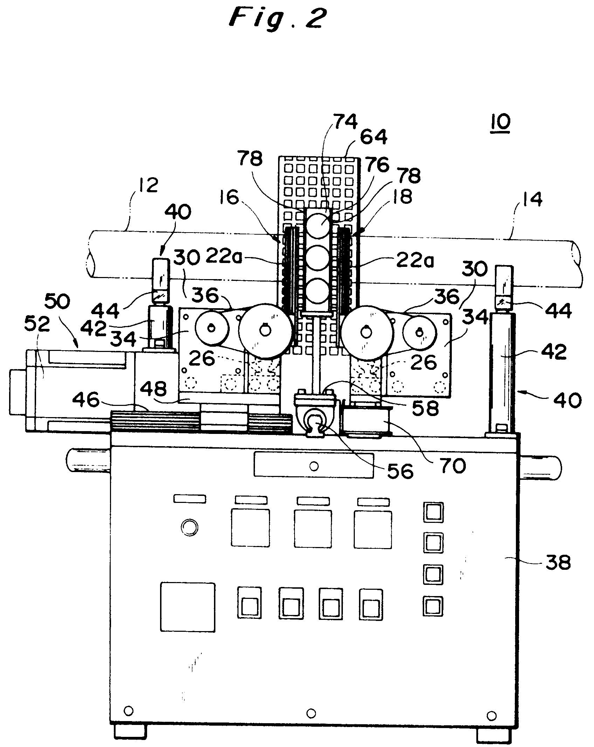

Fig. 1 to Fig. 3 show an embodiment of the welding apparatus of tubular members according to the present invention. As shown, this welding apparatus 10 basically includes a pair of holding devices or clamps 16, 18 for clamping respective tubular members 12, 14 made of a thermoplastic resin, for example of a polyarylene sulfide resin or PPS, and a heater 20 disposed between the clamps 16, 18.

Each clamp 16, 18 has a pair of clamp parts 22a, 22b each composed of a plurality of clamp plates arranged in parallel with each other. V-shape cuts 24a, 24b are formed in side edges opposed to each other, of these clamp parts 22a, 22b. The clamp parts 22a, 22b are fixed on sliders 28a, 28b, respectively, set as slidable on a guide rail 26, and thus are arranged as movable toward or away from each other by an appropriate drive device 30.

The drive devices 30 for clamps 16, 18 are constructed substantially in the same arrangement. Thus, describing only one of the drive devices 30, the drive device 30 is composed basically of a rotatable feed screw 32 meshed with the sliders 28a, 28b and arranged in parallel with a guide rail 26, an electric motor 34, preferably a dc motor, for rotating the feed screw 32, and a driving mechanism, preferably a wrapping connector driving mechanism having a timing belt 36, provided between an end of the feed screw 32 and a rotating shaft of the motor 34. In the feed screw 32, the direction of helix in the threaded portion meshed with one slider 28a is opposite to that in the threaded portion meshed with the other slider 28b, and the pitch of the ridges is common to the threaded portions. Accordingly, when the dc motor 34 is controlled to rotate the rotating shaft in a predetermined direction, the distance between the sliders 28a, 28b becomes shorter; when the rotating shaft is rotated in the opposite direction, the distance between the sliders 28a, 28b becomes longer.

The clamps 16, 18 are positioned on a base 38 of the welding apparatus 10 so that when the sliders 28a, 28b are moved toward each other to clamp an end portion of a corresponding tubular member 12, 14 between the cuts 24a, 24b of clamp parts 22a, 22b, the tubular members 12, 14 thus clamped are so set as to extend in the horizontal direction and to be aligned on the same axis. Here, reference numeral 40 designates a support on which a center portion of a corresponding tubular member 12 or 14 is mounted to be supported horizontally. The supports 40 each preferably comprise a support post 42 fixed on the base 38 and a fork member 44 set on the upper end of the support post 42. The support post can be vertically extended or contracted, thereby allowing the support post to be changed for different sizes of tubular members to be welded.

The guide rail 26 and drive device 30 for one clamp 18 are fixed to the base 38 of the welding apparatus 10. Thus, the tubular member 14 clamped by this clamp 18 is stationary relative to the base 38. On the other hand, the guide rail 26 and drive device 30 for the other clamp 16 are fixed on a slider 48 which is arranged to be slidable on the guide rail 46 provided on the base 38. The guide rail 46 extends in the same direction as the center axis of the tubular member 12 clamped by the clamp 16. Thus, moving the slider 48 along the guide rail 46, the clamp 16 can be moved toward or away from the stationary clamp 18, whereby the end face of the tubular member 12 clamped by the clamp 16 can be brought into contact with the opposed end face of the other tubular member 14 and urged against it.

The slider 48 is arranged to be movable along the guide rail 46 by an appropriate drive device 50. This drive device 50 is provided with an electric motor 52 fixed on the base 38, preferably an ac motor, a dc motor or a stepping motor, and the rotating shaft 54 of the motor 52 extends in parallel with the guide rail 46. The rotating shaft 54 is threaded, and a threaded portion thereof is meshed with the slider 48. When the motor 52 is controlled to rotate the rotating shaft 54, the slider 48 moves along the guide rail 46 in accordance with the rotational direction of the shaft.

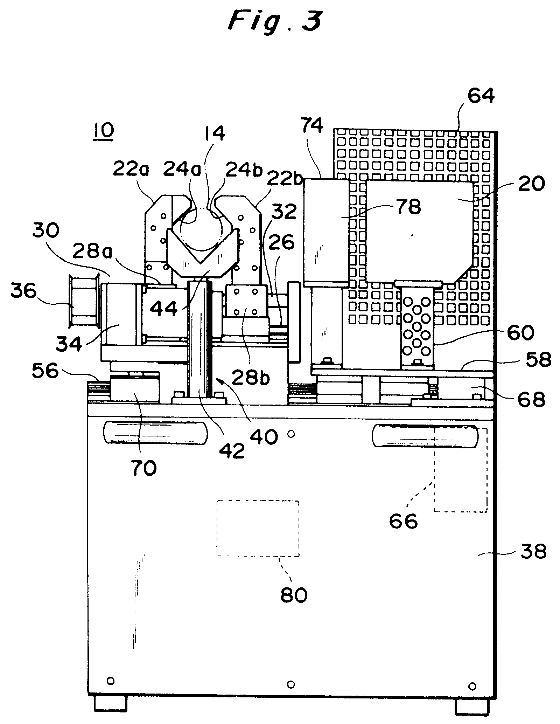

The heater 20 is located between the clamps 16, 18. This heater 20 is installed through a support plate 60 on a slider 58 arranged to be slidable on a guide rail 56. The guide rail 56 is fixed in position on the base 38 between the clamps 16, 18 and extends in a direction perpendicular to the center axis of the tubular members 12, 14 clamped by the clamps 16, 18. A drive device 62 is provided to the slider 58, and thus controlling this drive device 62, the slider 58, in turn the heater 20 can be reciprocated between a heating position between the tubular members 12, 14, and a withdrawn position (the position shown in Fig. 1 and Fig. 3) away from the heating position. Here, reference numeral 64 denotes a protection cover for protecting the heater 20 positioned at the withdrawn position.

The heater 20 comprises a case of a flat plate made for example of a porous ceramic plate, and a heating source such as a nichrome wire enclosed in the case. Of course, the heater 20 is not limited to this arrangement. Specifically, the heating source is not limited to the nichrome wire and the material for the case is not limited to ceramics. The heater may be one in which the case and the heating source are cast in an integral manner. The opposite surfaces of the heater 20 are heating surfaces for generating heat for melting the end faces 13, 15 of the tubular members 12, 14. When the heater 20 is located at the heating position, each heating surface is opposed to the end faces 13, 15 to be welded, of the corresponding tubular members 12, 14 clamped by the clamps 16, 18.

Further, the drive device 62 is provided with an electric motor 66 set in the rear portion (a portion on the withdrawn position side of heater 20) in the base 38, preferably an ac motor, a dc motor or a stepping motor with a reduction device. A rotating shaft of motor 66 projects from the top surface of base 38 and a pulley 68 is located on the distal end thereof. Another pulley 70 is set to be rotatable in the front portion of the top surface of base 38, and a belt 72, preferably a timing belt, is wound between the pulley 70 and the pulley 68 of motor 66. Belt 72 extends in parallel along the guide rail 56 and the slider 58 is connected to a part thereof. Accordingly, when the motor 66 is controlled to drive the timing belt 72, the slider 58 can be moved along the guide rail 56.

The slider 58 is further provided with a spacer 74 of a flat plate for keeping constant the distance between the end faces 13, 15 of the tubular members 12, 14 to be welded upon heating. This spacer 74 comprises a spacer main body 76 of a flat plate, and cover plates 78 removably attached to the opposite sides of the spacer main body 76. The width of the spacer 74, that is, the distance between the surfaces of the cover plates 78 is larger than the width of the heater 20.

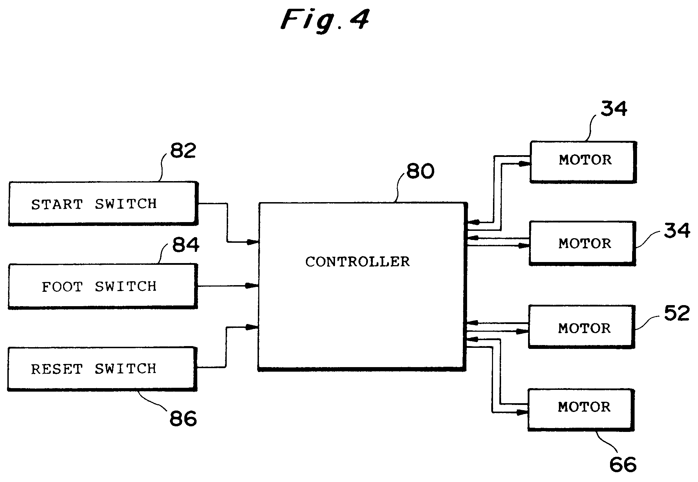

Further, the welding apparatus 10 is provided with a controller (Fig. 4) 80 for controlling the motors 34, 52, 66 in the drive devices 30, 50, 62. The controller 80 is set in the base 38 and is programmed so as to control the respective motors 34, 52, 66 in the manner as described below. The controller 80 comprises servo systems for the respective motors 52, 66.

With the welding apparatus 10 having the above construction, welding of the tubular members 12, 14 is carried out as follows.

First, pressing a start switch (Fig. 4) 82, the motor 66 is actuated to move the slider 58 by a predetermined amount, whereby the spacer 74 is set between the clamps 16, 18.

Next, the tubular member 12 is set on the clamp 16 so that the end face 13 to be welded is in contact with the spacer 74, and a foot switch (Fig. 4) 84 is stepped on. When the foot switch 84 is stepped on, the motor 34 for the clamp 16 is actuated to move the clamp parts 22a, 22b of clamp 16 toward each other to clamp the tubular member 12. After this clamping, the motor 34 reaches an overloaded state and thus the current supplied to the motor 34 exceeds a predetermined value. The controller 80 is so arranged as to detect the amplitude of the current flowing through the motor 34. Judging from the value of the current that the tubular member 12 is clamped, the controller 80 stops the operation of motor 34. After that, similarly, the tubular member 14 is set on the clamp 18 so that the end face 15 to be welded is in contact with the spacer 74, and the foot switch 84 is again stepped on, thereby clamping the tubular member 14 between the clamp parts 22a, 22b of clamp 18.

After the tubular member 14 is clamped by the clamp 18, the motor 34 is stopped. At the same time as or after the stoppage of the motor, motor 66 is actuated to set the heater 20 at the heating position between the end faces 13, 15 of the tubular members 12, 14. Since the width of the heater 20 is smaller than the width of the spacer 74, there is a certain clearance formed between each heating surface of heater 20 and the opposed end face 13, 15 of the corresponding tubular member 12, 14.

After the heater 20 is thus set at the heating position, a current is supplied to the heating source of heater 20, so that the end faces 13, 15 of the tubular members 12, 14 are heated to melt for a predetermined time. After a lapse of the heating time preliminarily determined, the motor 66 is again actuated to move the heater 20 and spacer 74 to the initial withdrawn position, and thereafter this state is maintained. In order to avoid interference of spacer 74 with the tubular members 12, 14 upon the movement to the withdrawn position, the cover plates 78 are preferably removed from the spacer main body 76 before heating or while heating.

After the spacer 74 and heater 20 return to the withdrawn position, the motor 52 is actuated to move the clamp 16 toward the clamp 18. By this, the end face 13 of the tubular member 12 clamped by the clamp 16 comes into contact with the end face 15 of the other tubular member 14, and is further urged against it.

Meanwhile, even if the end faces 13, 15 of the tubular members 12, 14 are heated above the melting temperature thereof upon heating, the end faces 13, 15 are soon cooled after the heater 20 returns to the withdrawn position, whereby the states of the end faces 13, 15 become inappropriate for welding. Therefore, it is necessary that the time period between when the heater 20 returns to the withdrawn position and when the end faces 13, 15 of the tubular members 12, 14 are brought into contact with each other should be very short, preferably not more than two seconds, more preferably not more than one second. Accordingly, the motor 66 is controlled to withdraw the heater 20 at a high speed, and the motor 52 is also controlled to move the tubular member 12 at a high speed before the end faces 13, 15 of the tubular members 12, 14 come into contact with each other.

After the end faces 13, 15 of the tubular members 12, 14 come to contact each other, the tubular member 12 is further moved by a predetermined amount, for example by 1.5 mm at a substantially constant speed in the same direction, but the speed of movement is switched to a low speed. After the end faces 13, 15 of the tubular members 12, 14 contact each other, penetration between the end faces 13, 15 effectively proceeds insofar as the moving speed is not too slow. It is also found from experiments that the bead formed in the weld portion is apt to become larger when the end faces 13, 15 of the tubular members 12, 14 are pressed against each other at high speed. Although it depends upon the thermoplastic resin forming the tubular members 12, 14, the speed of the low speed movement is normally set in the range of 0.225 mm/s to 50 mm/s, preferably in the range of 0.225 mm/s to 5 mm/s, more preferably in the range of 0.225 mm/s to 1 mm/s.

In this embodiment, the motor 52 functions as a servo motor, and the movement of tubular members 12, 14 can be pulse-controlled. Specifically, because the distance between the end faces 13, 15 of the tubular members 12, 14 is set to be equal to the width of the spacer 74, the end face 13 of the tubular member 12 can be accurately moved at high speed until the end face 13 comes to contact the end face 15 of the other tubular member 14 without providing special position detecting means, driving the motor 52 with a number of pulses corresponding to the distance or the width As for the movement after contact of the end faces, the motor 52 is driven with a number of pulses corresponding to the amount by which the tubular member 12 is to be moved at the low speed.

After the tubular member 12 is moved by the predetermined amount at the low speed, the operation of motor 52 is stopped, and the weld portion is cooled for a predetermined time, for example for 15 to 180 seconds. After the lapse of this cooling time, the motor 34 is reversed to separate the clamp parts 22a, 22b of clamps 16, 18 from each other, thereby releasing the clamping of the tubular members 12, 14. After that, the tubular members 12, 14 thus welded are manually removed from the welding apparatus 10, thus obtaining the desired, welded tubular member.

Finally, a reset switch (Fig. 4) 86 is pressed whereby the motor 52 is again actuated to return the slider 48 to the home position. When the slider 48 reaches the home position, the operation of motor 52 is stopped, whereby the apparatus reaches a standby state for welding of the next new tubular members.

Welding was actually conducted with the welding apparatus 10 of the above structure using PPS pipes of the thickness of 2.4 mm, model 25A manufactured by Kureha Kagaku Kogyo. When the pipe moving speed after contact of the end faces was set to 0.5 mm/s and the amount of movement was 1.5 mm, the amount of projection of the bead formed on the inner circumference of the welded pipes was about 0.7 mm and the weld strength was 65 MPa (according to JIS K6742). When the amount of movement was the same and the moving speed was 8 mm/s, the amount of projection of bead was 1.5 mm and the weld strength was 68 MPa (according to JIS K6742). When the moving speed was 0.1 mm/s, welding was incomplete.

As described above, according to this embodiment, since the time period from completion of heating of the end faces 13, 15 of the tubular members 12, 14 to contact of the end faces 13, 15 with each other is greatly shortened, states inappropriate for welding are prevented from occurring in the end faces 13, 15. Since the tubular member 12 is moved at a constant low speed and by a predetermined amount suitable for welding toward the other tubular member 14 after the contact of the end faces, the size of the bead formed in the weld portion becomes approximately constant. Further, in this case, because the press-contact pressure gradually increases, another advantage of enhanced weld strength can be obtained.

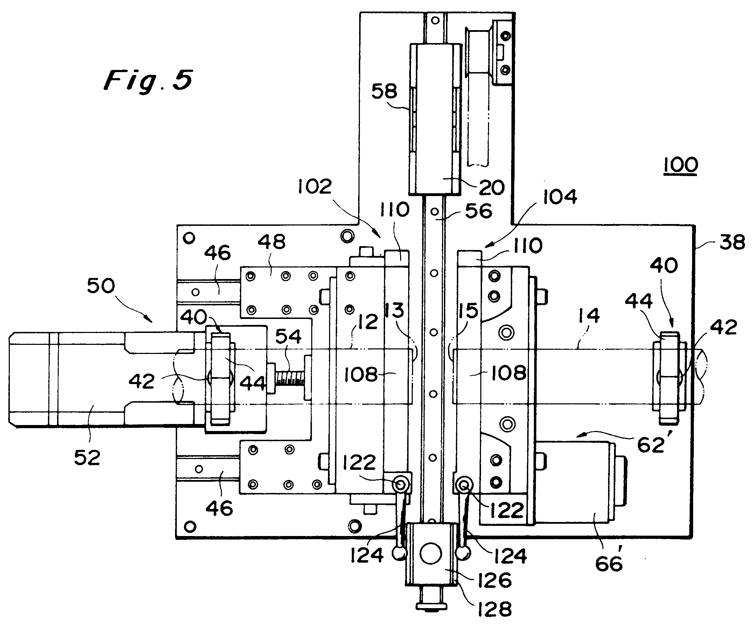

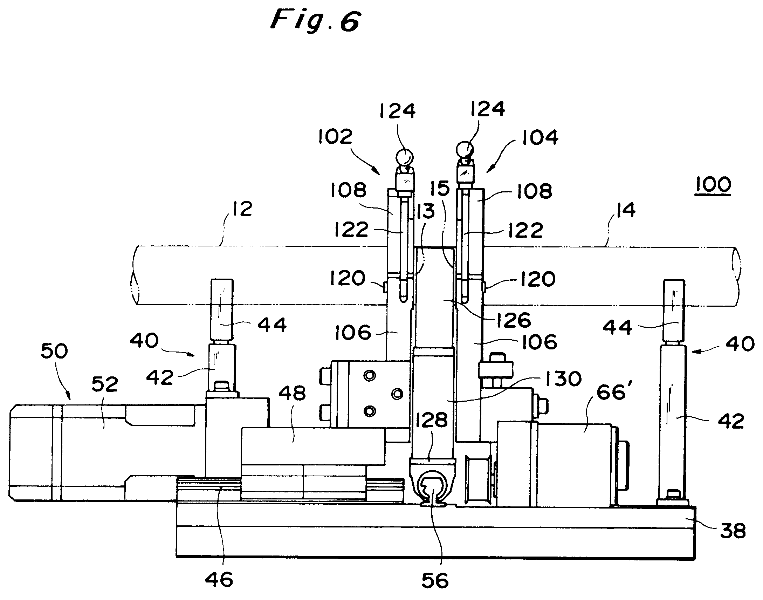

Fig. 5 to Fig. 7 show a second embodiment of the welding apparatus according to the present invention. A welding apparatus 100 of the second embodiment is substantially the same as the welding apparatus 10 of the first embodiment as described above except that the clamps are manually operated and the spacer is manually moved along the guide rail. Thus, like or corresponding parts to those in the apparatus 10 of the first embodiment are designated by like reference numerals and detailed description thereof is omitted. It should be noted that the welding apparatus 100 shown in Fig. 5 to Fig. 7 is illustrated omitting the lower portion of the base 38.

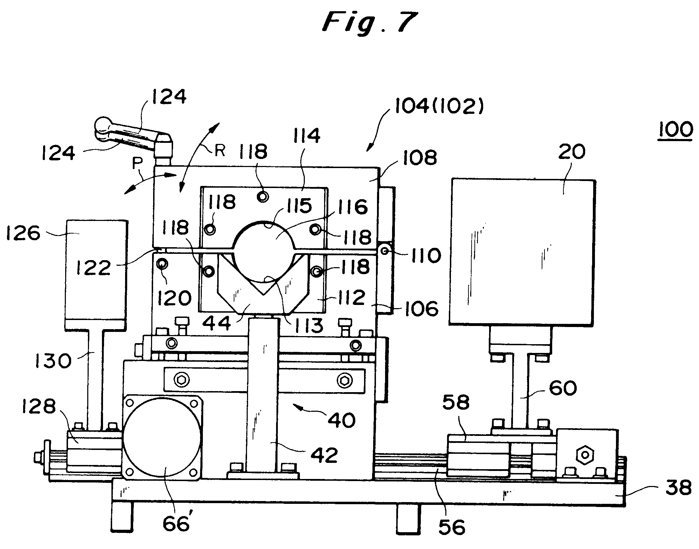

Each of clamps 102, 104 in the welding apparatus 100 has a lower clamp body 106 and an upper clamp body 108 interconnected as rotatable in the directions R shown in Fig. 7 through a hinge mechanism 110 to the lower clamp body 106. The clamps 102, 104 are constructed substantially in the same manner except that the lower clamp body 106 of one clamp 102 is fixed to the slider 48 while the lower clamp body 106 of the other clamp 104 is fixed to the base 38.

A rectangular cut is formed in the lower clamp body 106 and the upper clamp body 108 in each clamp 102, 104, and adapters 112, 114 are detachably mounted in the cuts. These adapters 112, 114 have nearly semi-circular cuts 113, 115 so that a substantially circular hole 116 is formed as shown in Fig. 7. The tubular members 12, 14 are set in the hole 116, and the tubular members are clamped between the upper and lower adapters 112, 114 when the upper and lower clamp bodies 106, 108 are closed as shown in Fig. 7. The shape and diameter of the hole 116, that is, the shape and the size of the cuts 113, 115 of the adapters 112, 114 are so determined as to be matched with the cross section and the outer diameter of the tubular members to be welded. Thus, when tubular members with a different size or a different shape are welded, the adapters are exchanged for different adapters matched with the new tubular members. Preferably, the adapters 112, 114 each have screw holes (not shown) of an elongated hole type and screws 118 are put into the screw holes to fix the adapters 112, 114 to the clamp bodies 106, 108. Employing the elongated holes for the screw holes, centering of the tubular members 12, 14 can be readily performed.

Further, each clamp 102, 104 has a lock mechanism for locking and tightening the upper and lower clamp bodies 106, 108 in the closed state shown in Fig. 7. Among a variety of lock mechanisms, the present embodiment employs one comprising a lock rod 122 mounted rotatably in the directions P (Fig. 7) through a pin 120 to the lower clamp body 106 at one end and adapted to fit in recesses (not shown) formed on sides of the upper and lower clamp bodies 106, 108, and a tightening handle 124 meshed with a threaded portion formed at the free end of the lock rod 122. When the lock rod 122 is brought to an upright posture with the upper clamp body 108 set on the lower clamp body 106, the lock rod 122 fits in the recesses in the clamp bodies 106, 108 and the upper end threaded portion projects upward from the top face of the upper clamp body 108. Then the tightening handle 124 is set to mesh with the threaded portion. On rotating the handle to tighten, the upper and lower clamp bodies 106, 108 are locked tightly with each other and the tubular members 12, 14 between them are also clamped securely.

Further, a spacer 126, for keeping constant the distance between the end faces 13, 15 of the tubular members 12, 14, is mounted through a support plate 130 to a slider 128. This slider 128 is mounted slidably on the guide rail 56 separately and independently of the slider 58 for heater 20. There is no drive device connected to the slider 128, and therefore the movement thereof is effected manually or by the slider 58 for heater 20, as detailed below. In the second embodiment an electric motor 66' of a drive device 62' for moving the heater 20, preferably a reversible, ac motor, dc motor or stepping motor with a reduction device, is set on the upper surface of the base 38, and it can be readily understood that the motor 66' is not different in function from the drive device 62 in the first embodiment. Further, this motor 66' and the motor 52 of the drive device 50 for moving the clamp 102 along the guide rail 46 are connected to the controller (not shown in Fig. 5 to Fig. 7) similar to that shown in Fig. 4, and are controlled by this controller.

With such a welding apparatus 100 of the second embodiment, welding of the tubular members 12, 14 is conducted as follows. First, the spacer 126 is manually moved to be set between the clamps 102, 104. Next, the handle 124 is manually turned to loosen the tightening, and the lock rod 122 is rotated to be taken out of the recesses in the clamp bodies 106, 108, thereby releasing the lock of the clamp bodies 106, 108. Then the upper clamp body 108 is rotated away from the lower clamp body 106, and the end portion of the tubular member 12, 14 is set in the cut 103 of the adapter 112 on the lower clamp body 106. Next, the positions of the tubular members 12, 14 are adjusted so that the end faces 13, 15 of the tubular members 12, 14 come to contact the spacer 126. After that, the upper clamp body 108 is rotated in the reverse direction to pinch the tubular member 12, 14 between the upper and lower clamp bodies 106, 108. In this state the lock rod 122 is rotated to fit in the recesses in the clamp bodies 106, 108 and the handle 124 is turned to tighten, whereby the tubular members 12, 14 are clamped tightly between the clamp bodies 106, 108.

After that, the start switch is pressed, so that the controller actuates the motor 66' to set the heater 20 at the heating position between the clamps 102, 104. On this occasion, the slider 58 for the heater 20 pushes the slider 128 for the spacer 126 so as to return the spacer 126 to the home position away from the space between the clamps 102, 104.

After that, the operations are the same as in the first embodiment as described previously. In the case of this second embodiment the spacer 126 does not pass between the tubular members 12, 14 after the end faces 13, 15 of the tubular members 12, 14 are heated to melt, and therefore the second embodiment obviates the cover plates 78 of the spacer 74 in the first embodiment, thus requiring no time and labor for removing the cover plates 78.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. A method for welding a pair of tubular members made of a thermoplastic resin, comprising:
a step of holding said tubular members coaxially so that the end faces of said tubular members to be welded are opposed to and spaced from each other;
a step of locating a heater between said end faces in such a state that said heater is separated from each of said end faces by a certain clearance;
a step of activating said heater to heat and melt said end faces by heat from said heater;
a step of removing said heater from between said end faces after completion of heating of said end faces;
a step of moving one of said tubular members in a predetermined direction relative to the other tubular member to bring said end faces into contact with each other;
a step of further moving said one tubular member in said predetermined direction relative to said other tubular member after said end faces contact each other; and
a step of stopping the relative movement of said tubular members to hold said tubular members in a stationary state, when said one tubular member is moved by a predetermined amount relative to said other tubular member after contact of said end faces with each other;
wherein the time period between the completion of heating of said end faces and contact of said end faces with each other is set to a time in which said end faces are prevented from reaching a state inappropriate for welding; and
wherein in most of the time period between the contact of said end faces with each other and stoppage of the relative movement of said tubular members, the relative speed of movement of said one tubular member relative to said other tubular member is kept substantially constant.

2. A welding method according to Claim 1, wherein the time period between the completion of heating of said end faces and contact of said end faces with each other is within two seconds.

3. A welding method according to Claim 1 or Claim 2, wherein the relative speed of movement of said one tubular member relative to said other tubular member is in the range of 0.225 mm/s to 50 mm/s.

4. A welding method according to any preceding claim, wherein said thermoplastic resin is a polyarylene sulfide resin.

5. An apparatus for welding a pair of tubular members made of a thermoplastic resin comprising:
a pair of holding devices for holding the respective tubular members horizontally and coaxially;
a first drive device for moving one of said holding devices toward or away from the other holding device;
a heater for heating and melting end faces of said tubular members, to be welded, said heater being arranged to be movable between a heating position between said holding devices, and a withdrawn position away from said heating position;
a second drive device for driving said heater; and
a controller for controlling said first drive device and said second drive device;
wherein said controller comprises means for controlling said second drive device so that said heater is moved from said heating position to said withdrawn position after the completion of heating of said end faces of said tubular members to be welded held by said holding devices, means for controlling said first drive device so that one of said holding devices is moved in a predetermined direction relative to the other holding device to bring said end faces into contact with each other, means for controlling said first drive device so that said one holding device is further moved in said predetermined direction relative to said other holding device after contact of said end faces with each other, and means for controlling said first drive device so that the relative movement of said holding devices are stopped when said one holding device is moved by a predetermined amount relative to said other holding device after contact of the end faces with each other, said controller setting a time period between the completion of heating of said end faces and contact of said end faces with each other to a time in which said end faces are prevented from reaching a state inappropriate to welding, and said controller keeping the relative speed of movement of said one tubular member relative to said other tubular member substantially constant, in most of the time period between contact of said end faces with each other and stoppage of relative movember of said tubular members.

6. A welding apparatus according to Claim 5, wherein the time period between completion of heating of said end faces and contact of said end faces with each other is within two seconds.

7. A welding apparatus according to Claim 5 or Claim 6, wherein the relative speed of movement of said one tubular member relative to said other tubular member is in the range of 0.225 mm/s to 50 mm/s.

8. A welding apparatus according to any one of Claims 5 to 7 wherein said thermoplastic resin is a polyarylene sulfide resin.

9. A welding apparatus according to any one of Claims 5 to 8, wherein said first drive device and/or said second drive device comprises an electric motor, which motor is preferably an ac motor, a dc motor, or a stepping motor.

10. A welding apparatus according to Claim 9, wherein said electric motor and said controller constitute a servo system.

11. A welding apparatus according to any one of Claims 5 to 10 wherein each of said holding devices comprises a pair of clamp parts for clamping said tubular member therebetween, said clamp parts being arranged so as to open or close in a direction perpendicular to the axis of said tubular member held by said holding device, and a third drive device for opening or closing said clamp parts, wherein said controller controls said third drive device.
